(19) Europäisches Patentamt

European Patent Office

Office européen des brevets

(11) **EP 1 161 076 A1**

(12) **DEMANDE DE BREVET EUROPEEN**

(43) Date de publication:
**05.12.2001 Bulletin 2001/49**

(51) Int Cl.⁷: **H04M 19/04**

(21) Numéro de dépôt: **01201134.2**

(22) Date de dépôt: **27.03.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **04.04.2000 FR 0004289**

(71) Demandeur: **Koninklijke Philips Electronics N.V.**
**5621 BA Eindhoven (NL)**

(72) Inventeurs:
• **Mousty, David**
  **75008 Paris (FR)**
• **Carriere, Etienne**
  **75008 Paris (FR)**

(74) Mandataire: **Chaffraix, Jean**
**Société Civile S.P.I.D.**
**156, Boulevard Haussmann**
**75008 Paris (FR)**

(54) **Radiotéléphone portatif à sonnerie améliorée**

(57) La présente invention propose un appareil portatif muni d'un dispositif de génération de signal acoustique. Un tel appareil comprend principalement une unité d'entrée (IU) destinée à fournir un signal numérique d'entrée (in). Il comprend une ligne à retard (DL) destinée à recevoir N échantillons du signal numérique d'entrée, à mémoriser et à retarder des valeurs de données associées aux échantillons. Il comprend également une unité de calcul (AU) destinée à combiner au moins deux valeurs de données retardées venant de la ligne à retard afin de former une valeur de donnée modifiée qui est de nouveau mémorisée dans la ligne à retard et retardée de la valeur N, l'ensemble des valeurs de données modifiées formant également un signal de sortie (s) dont le contenu fréquentiel comporte la fréquence fondamentale du signal à produire enrichi par des harmoniques d'intensités différentes. Ledit appareil portatif comprend enfin une unité de sortie (OU) destinée à produire un son musical à partir dudit signal de sortie, en le convertissant en un signal analogique agréable à entendre par l'utilisateur.

Application: Radiotéléphone portatif

FIG. 2

EP 1 161 076 A1

## Description

La présente invention concerne un appareil portatif muni d'un dispositif de génération de signal acoustique.

Un tel appareil portatif peut être, par exemple, un radiotéléphone portatif fonctionnant dans un système numérique de télécommunications de type DECT, ou bien dans un système de radiocommunications mobiles de type GSM.

La demande de brevet japonais n°09101786A décrit un radiotéléphone portatif comprenant un dispositif de génération de signal acoustique permettant de générer des mélodies en utilisant un processeur de signaux numériques tout en disposant de faibles ressources mémoires. Ledit dispositif de génération de mélodie possède une mémoire de données dans laquelle les données relatives à la mélodie telles que les notes sont stockées. Un contrôleur lit séquentiellement les données relatives à la note. Un générateur de son produit un signal source périodique ayant la fréquence de la note. Un générateur d'enveloppe produit un signal d'enveloppe qui est combiné avec le signal source afin de générer la mélodie.

Le dispositif de génération de signal acoustique de l'art antérieur présente l'inconvénient de générer une mélodie à la sonorité peu musicale, et de ce fait peu agréable à entendre pour l'usager.

L'invention a pour but de remédier à cet inconvénient, en proposant un appareil portatif muni d'un dispositif de génération de signal acoustique présentant une sonnerie agréable.

A cet effet, la présente invention propose un appareil portatif muni d'un dispositif de génération de signal acoustique comprenant :

- une unité d'entrée destinée à fournir un signal numérique d'entrée,
- une ligne à retard destinée à recevoir initialement N échantillons du signal numérique d'entrée, la valeur de N dépendant de la fréquence fondamentale du signal acoustique à produire, à mémoriser et à retarder des valeurs de données associées aux échantillons,
- une unité de calcul destinée à combiner au moins deux valeurs de données retardées venant de la ligne à retard afin de former une valeur de donnée modifiée qui est de nouveau mémorisée dans la ligne à retard et retardée de la valeur N, l'ensemble des valeurs de données modifiées formant également un signal de sortie,
- une unité de sortie destinée à produire le signal acoustique à partir dudit signal de sortie.

Un tel dispositif de génération de signal acoustique permet de modifier de façon simple le contenu fréquentiel du signal numérique d'entrée chargé initialement dans la ligne à retard grâce à l'unité de calcul. Le timbre du son obtenu en sortie du dispositif de génération de signal acoustique se trouve enrichi par la présence d'harmoniques en plus de la fréquence fondamentale du signal acoustique. L'appareil portatif comprenant un tel dispositif permet ainsi de générer des mélodies agréables à entendre, les sons produits étant proches des sons naturels, à la différence des appareils portatifs classiques qui génèrent des sons musicalement pauvres à partir de signaux sinusoïdaux.

La présente invention propose également un appareil portatif muni d'un dispositif de génération de signal acoustique comprenant :

- des moyens de sur-échantillonnage aptes à calculer une fréquence de sur-échantillonnage à partir de la fréquence fondamentale du signal acoustique à produire, d'une fréquence d'échantillonnage à laquelle le signal de sortie doit être fourni et d'une longueur maximale de la ligne à retard, la ligne à retard et l'unité de calcul traitant les données à la fréquence de sur-échantillonnage ainsi déterminée,
- des moyens de sous-échantillonnage aptes à sous-échantillonner le signal de sortie échantillonné à la fréquence de sur-échantillonnage afin de fournir un signal de sortie échantillonné à la fréquence d'échantillonnage à l'unité de sortie.

Un tel dispositif permet d'optimiser le remplissage de la ligne à retard, et par conséquent le traitement du signal numérique d'entrée par l'ensemble ligne à retard plus unité de calcul, en fonction de la fréquence fondamentale du signal acoustique à produire.

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés dans lesquels :

- la figure 1 est une représentation schématique d'un appareil portatif selon l'invention,
- la figure 2 est une représentation schématique du dispositif de génération de signal acoustique contenu dans l'appareil portatif selon l'invention,
- la figure 3 est une représentation schématique d'un mode de réalisation d'un dispositif de génération de signal acoustique,
- la figure 4 est une représentation schématique d'un perfectionnement du mode de réalisation de la figure 3, et
- la figure 5 est un organigramme d'une méthode de génération de signal acoustique selon l'invention.

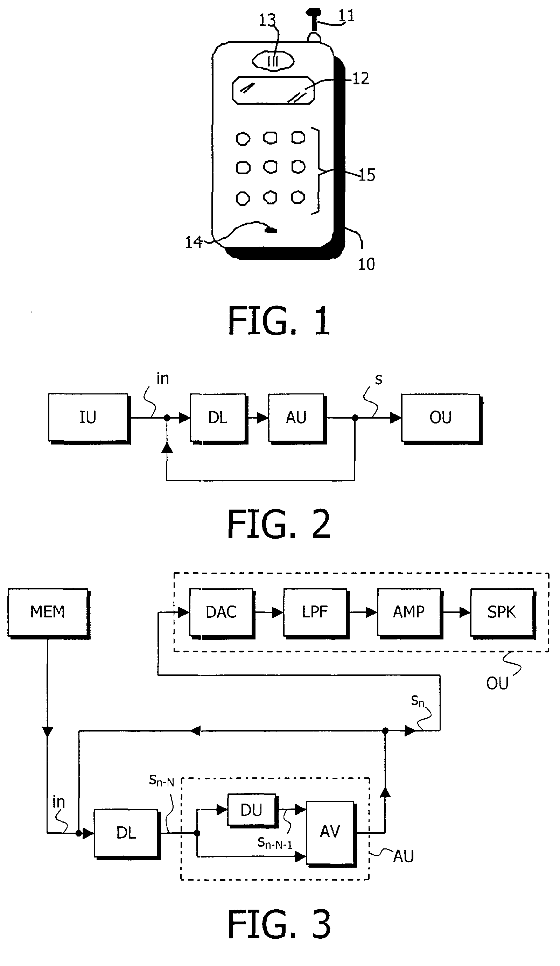

La figure 1 représente schématiquement un appareil portatif selon l'invention. Cet appareil portatif est ici un radiotéléphone portatif (10) comprenant une antenne (11), un écran (12), un écouteur (13), un microphone (14), un clavier (15) et contient un dispositif de génération de signal acoustique non représenté sur cette figure. La présente invention n'est pas limitée à ce type d'appareil portatif mais peut également s'appliquer à tout autre type d'appareil portatif disposant d'une sonnerie et de ressources de calcul limitées, comme par exemple les assistants personnels numériques.

La figure 2 illustre le principe de fonctionnement du dispositif de génération de signal acoustique. Un tel dispositif de génération de signal acoustique comprend principalement :

-   une unité d'entrée (IU) destinée à fournir un signal numérique d'entrée (in) ; cette unité d'entrée est par exemple une mémoire dans laquelle est stocké un signal de référence,
-   une ligne à retard (DL) destinée à :

    •   être initialement chargée par N échantillons du signal numérique d'entrée, la valeur de N dépendant de la fréquence fondamentale d'un signal acoustique à produire,
    •   mémoriser et retarder de façon cyclique des valeurs de données associées aux échantillons,

-   une unité de calcul (AU) destinée à combiner au moins deux valeurs de données retardées venant de la ligne à retard afin de former une valeur de donnée modifiée qui est de nouveau mémorisée dans la ligne à retard et retardée de la période N, l'ensemble des valeurs de données modifiées formant également un signal de sortie (s) dont le contenu fréquentiel comporte la fréquence fondamentale du signal à produire enrichi par des harmoniques d'intensités différentes,
-   une unité de sortie (OU) destinée à produire un son musical agréable à partir du signal de sortie en le convertissant en signal acoustique analogique audible par l'utilisateur.

Dans le mode de réalisation préféré, illustré en figure 3, l'unité d'entrée (IU) comporte une mémoire (MEM) dans laquelle est stocké le signal de référence (in). Ce signal de référence est composé d'échantillons dont la valeur moyenne est nulle et qui représentent un bruit blanc. Il constitue le signal d'entrée de la ligne à retard principale (DL).

La ligne à retard principale permet de charger initialement les N échantillons du signal numérique d'entrée mais également de les mémoriser et de les retarder de la période N, fournissant ainsi à l'unité de calcul des échantillons retardés ($S_{n-N}$). La longueur N de la ligne à retard principale qui est utilisée détermine la fréquence fp de la note à jouer. Par exemple, pour jouer la note C3 de fréquence fondamentale $f_{C3}$ = 130.80 Hz, le nombre N d'échantillons nécessaires est égal à Fe / $f_{c3}$ soit 244 échantillons.

L'unité de calcul (AU) comprend une ligne à retard unitaire (DU) d'une longueur d'un échantillon et une unité de moyennage (AV) qui reçoit, à un instant d'échantillonnage n, les échantillons ($S_{n-N}$) issu de la ligne à retard principale et ($S_{n-N-1}$) issu de la ligne à retard unitaire. L'unité de moyennage détermine alors la valeur de donnée de l'échantillon ($s_n$) du signal de sortie (s) de la façon suivante :

$$S_n = C_{sustain} \times (S_{n-N} + S_{n-N-1})$$

où $C_{sustain}$ est un coefficient de maintien.

La mise en oeuvre d'un tel algorithme permet d'obtenir un signal acoustique de fréquence fondamentale fp comportant des harmoniques de fp d'intensités différentes, ce signal acoustique présentant une sonorité proche des sons produits par des instruments de musique. Dans le mode de réalisation préféré, le coefficient de maintien est égal à 1/2 ou très proche de cette valeur, ce qui donne un son ressemblant au son produit par une guitare à la sortie du dispositif de génération de signal acoustique.

Il apparaîtra cependant à l'homme du métier que l'invention ne se limite pas à la combinaison des deux échantillons retardés décrite ci-dessus mais qu'elle peut s'appliquer à toute combinaison de deux ou plusieurs échantillons retardés en utilisant, le cas échéant d'autres lignes à retard ou en modifiant la fonction réalisée par l'unité de moyennage. Cependant, la solution correspondant au mode de réalisation préféré présente l'avantage de faire appel à de faibles capacités de calcul.

Afin d'être converti en un signal audible, le signal de sortie issu de l'unité de calcul est envoyé vers l'unité de sortie (OU). Cette unité de sortie comprend en série :

-   un convertisseur numérique - analogique (DAC) qui convertit le signal numérique de sortie en un signal analogique de sortie,
-   un filtre passe bas (LPF) qui élimine les fréquences indésirables du signal analogique de sortie, dues notamment au bruit,
-   un amplificateur (AMP) qui amplifie le signal analogique de sortie,
-   et un haut-parleur (SPK) qui produit le son musical désiré.

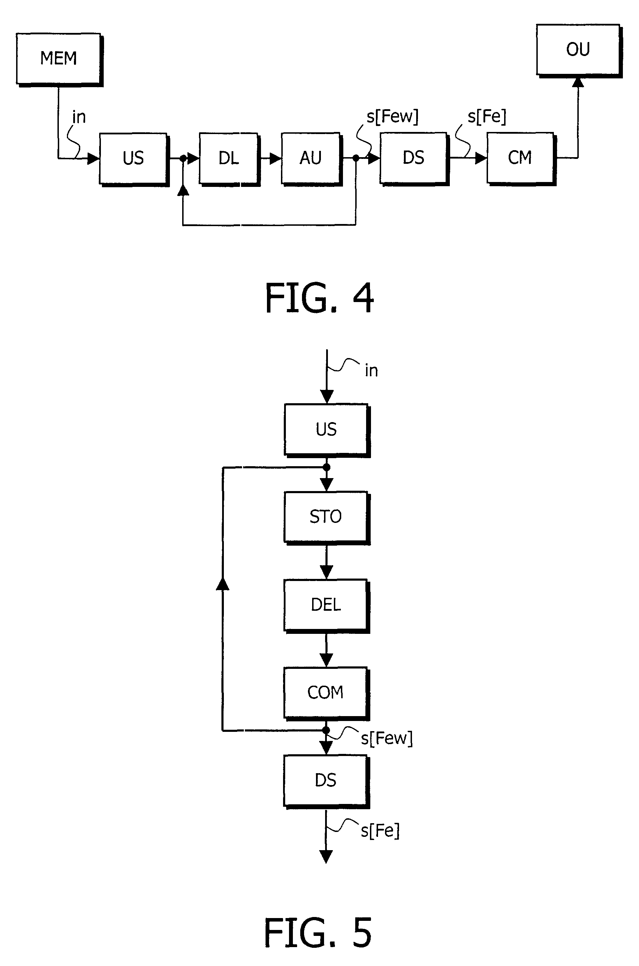

La figure 4 décrit un perfectionnement du mode de réalisation de la figure 3. Dans ce second mode de réalisation, le signal de référence (in) stocké dans la mémoire (MEM) représente un bruit blanc comprenant 128 échantillons codés sur 16 bits. Ce signal de référence a une valeur moyenne nulle et est fixé une fois pour toute pour l'application choisie, ceci dans un souci d'économie de l'espace mémoire.

Le signal de référence est chargé une ou plusieurs fois dans la ligne à retard (DL) dont la longueur maximale Nmax est également imposée par l'application : elle est égale à 256 échantillons dans ce second mode de réalisation, les échantillons, donc l'amplitude du son, étant codés sur 16 bits.

Le signal de sortie (s[Fe]) doit être fourni par l'unité de calcul (AU) à l'unité de sortie (OU) à une fréquence d'échantillonnage Fe donnée, qui est dans notre cas égale à 32 kHz. Si le traitement des données par la ligne à retard et l'unité de calcul se fait à la fréquence d'échantillonnage Fe, les notes de fréquences élevées vont utiliser une faible partie de la ligne à retard et le signal acoustique, résultant du traitement par l'ensemble constitué de la ligne à retard et de l'unité de calcul, ne sera pas de bonne qualité. En effet, le nombre d'échantillons N fournis par l'unité d'entrée à la ligne à retard pour générer une note de fréquence fp est égal à :

N = Fe / fp où / est la division fournissant une valeur entière de N par défaut. Quand la fréquence fp augmente, le nombre N d'échantillons diminue, résultant en un remplissage de la ligne à retard de moins en moins important et donc à un moins bon traitement des notes de plus haute fréquence. Ainsi, pour jouer la note D5 de fréquence fondamentale $f_{D5}$ = 587.40 Hz, le nombre N d'échantillons sera égal à Fe / $f_{D5}$ soit 54 échantillons, ce qui représente moins du quart de la taille maximale Nmax de la ligne à retard.

Ce second mode de réalisation a pour objet d'adapter de façon dynamique la fréquence de traitement des données par la ligne retard et l'unité de calcul, en fonction la fréquence fondamentale fp du signal acoustique à produire et en tenant compte des contraintes liées à la longueur maximale Nmax de la ligne à retard et à la fréquence d'échantillonnage Fe du signal de sortie. Ce mode de réalisation permet ainsi d'optimiser le remplissage de la ligne à retard pour les hautes fréquences et par conséquent, d'améliorer la qualité sonore desdites fréquences.

A cet effet, le dispositif de génération de signal acoustique de la figure 4 comprend des moyens de sur-échantillonnage (US). Ces moyens de sur-échantillonnage permettent d'effectuer le traitement des données à une fréquence de sur-échantillonnage Few supérieure à la fréquence d'échantillonnage Fe afin d'obtenir une meilleure précision dans les résultats. Pour cela, les moyens de sur-échantillonnage calculent un coefficient multiplicatif K permettant de passer de la fréquence d'échantillonnage Fe à la fréquence de sur-échantillonnage Few : Few = K x Fe. Ils assurent un remplissage optimal de la ligne à retard de la façon suivante : soit N le nombre d'échantillons correspondant à la fréquence de sur-échantillonnage Few, on a :

$$N = Few / fp.$$

Le coefficient K est calculé en maximisant la valeur N tout en s'assurant que cette valeur reste inférieure à Nmax. Pour des raisons d'implémentation, le rapport K est égal à une puissance de 2 dans le second mode de réalisation, soit :

K = $2^i$, i étant un entier qui est calculé comme suit :
i = seuil ( $\log_2$ ( fp x Nmax / Fe ) )
où seuil(x) est la fonction qui donne la valeur entière par défaut de x et $\log_2(x)$ est la fonction qui donne le logarithme base 2 de x.

Ainsi, pour jouer la note D5 de fréquence $f_{D5}$ = 587.40 Hz, la valeur du rapport K est égal à 4 correspondant à une fréquence de sur-échantillonnage de 128 kHz et le nombre N d'échantillons est égal à Few / $f_{D5}$ soit 217 échantillons au lieu des 54 échantillons qui auraient été utilisés avec une fréquence d'échantillonnage Fe égale à 32 kHz. Il apparaîtra à l'homme du métier qu'un rapport K différent d'une puissance de 2 tel que, par exemple, K = fp x Nmax / Fe est également possible. Cependant une telle solution nécessite des moyens de calcul plus complexes que ceux utilisés dans le mode de réalisation qui est décrit ici.

Le dispositif de génération de signal acoustique comprend également des moyens de sous-échantillonnage (DS) qui permettent de sous-échantillonner le signal de sortie s[Few] échantillonné à la fréquence de sur-échantillonnage Few afin de fournir un signal de sortie s[Fe] échantillonné à la fréquence d'échantillonnage Fe. Comme le coefficient K est une puissance de 2, les moyens de sous-échantillonnage selon l'invention comprennent des filtres de décimation successifs.

Ce second mode de réalisation a pour objet d'éviter des phénomènes parasites lors de transitions entre une note d'amplitude décroissante et un silence, ces transitions se traduisant par un claquement.

En effet, la ligne à retard est initialisée avec N valeurs de données issues de la mémoire (MEM) quelle que soit la fréquence fondamentale fp de la note. Par conséquent, pour une fréquence donnée, le nombre N d'échantillons du signal numérique d'entrée (in) chargé dans la ligne à retard (DL) peut être différent d'un multiple de 128, le signal numérique d'entrée comprenant 128 échantillons dont la valeur moyenne est nulle. La ligne à retard contient donc des échantillons qui peuvent avoir une valeur moyenne non nulle et le signal de sortie (s) généré présente alors une composante continue qui est perçue par l'utilisateur comme un claquement sur les transitions entre un signal d'amplitude décroissante et un silence. Afin de supprimer cette composante continue perturbatrice, le dispositif de génération de signal acoustique comprend des moyens de correction (CM) qui calculent la valeur moyenne des valeurs de données contenues dans la ligne à retard et retirent cette valeur moyenne aux valeurs de données du signal de sortie échantillonné à la fréquence de sur-échantillonnage ou à la fréquence d'échantillonnage.

Un radiotéléphone portatif comprenant un tel dispositif de génération de signal acoustique permet ainsi de générer des mélodies présentant des sonorités quasi-naturelles proches de celles produites par des instruments de musique et de ce fait beaucoup plus agréables à entendre pour l'utilisateur que les sonneries habituelles produites, par exemple, par les téléphones portables actuellement disponibles sur le marché.

La figure 5 est un organigramme d'une méthode de génération de signal acoustique à partir d'un signal numérique d'entrée. Ladite méthode comprend les étapes suivantes de :

- stockage (STO) de valeurs de données associées à N échantillons du signal numérique d'entrée dans une table, la valeur de N dépendant de la fréquence fondamentale du signal acoustique à produire,
- retardement (DEL) des valeurs de données stockées dans la table,
- calcul (COM) destinée à combiner au moins deux valeurs de données retardées issues de la table afin de former une valeur de donnée modifiée, destinée à être de nouveau stockée dans la table et retardée de la valeur N, l'ensemble des valeurs de données modifiées formant également le signal de sortie.

La méthode de génération de signal acoustique comprend en outre les étapes de :

- sur-échantillonnage (US) destinée à calculer une fréquence de sur-échantillonnage à partir de la fréquence fondamentale du signal acoustique à produire, d'une fréquence d'échantillonnage à laquelle le signal de sortie doit être fourni et d'une longueur maximale de la table, les étapes de stockage et de calcul traitant les données à la fréquence de sur-échantillonnage ainsi déterminée,
- sous-échantillonnage (DS) du signal de sortie échantillonné à la fréquence de sur-échantillonnage (s[Few]) afin de fournir un signal de sortie échantillonné à la fréquence d'échantillonnage (s[Fe]).

Les différentes étapes énumérées ci-dessus sont mises en oeuvre de façon plus détaillée conformément à la description des figures 3 et 4.

Il est possible d'implémenter ces étapes au moyen d'un circuit d'ordinateur convenablement programmé. Un jeu d'instructions contenu dans une mémoire de programmation peut provoquer le circuit d'ordinateur à effectuer les différentes étapes. Le jeu d'instructions peut être chargé dans la mémoire de programmation par la lecture d'un support de données comme, par exemple, un disque qui contient le jeu d'instructions. La lecture peut s'effectuer par l'intermédiaire d'un réseau de communication comme, par exemple, l'Internet. Dans ce cas, un fournisseur de service (en anglais: service provider) mettra le jeu d'instructions à la disposition des intéressées.

Aucun signe de référence entre parenthèses dans une revendication ne saurait être interprété de façon limitative. Il doit être clair que le verbe "comprendre" et ses conjugaisons n'exclut pas la présence d'autres étapes ou éléments que ceux listés dans une revendication. Le mot "un" ou "une" précédant un élément ou une étape n'exclut pas la présence d'une pluralité de ces éléments ou ces étapes.

**Revendications**

1. Appareil portatif muni d'un dispositif de génération de signal acoustique comprenant :

- une unité d'entrée (IU) destinée à fournir un signal numérique d'entrée (in),
- une ligne à retard (DL) destinée à recevoir initialement N échantillons du signal numérique d'entrée, la valeur de N dépendant de la fréquence fondamentale du signal acoustique à produire, à mémoriser et à retarder des valeurs de données associées aux échantillons,
- une unité de calcul (AU) destinée à combiner au moins deux valeurs de données retardées venant de la ligne à retard afin de former une valeur de donnée modifiée qui est de nouveau mémorisée dans la ligne à retard et retardée de la valeur N, l'ensemble des valeurs de données modifiées formant également un signal de sortie (s),
- une unité de sortie (OU) destinée à produire le signal acoustique à partir dudit signal de sortie.

2. Appareil portatif selon la revendication 1, où ledit dispositif de génération de signal acoustique comprend également :

- des moyens de sur-échantillonnage (US) aptes à calculer une fréquence de sur-échantillonnage à partir de la fréquence fondamentale du signal acoustique à produire, d'une fréquence d'échantillonnage à laquelle le signal de sortie doit être fourni et d'une longueur maximale de la ligne à retard (DL), la ligne à retard et l'unité de calcul (AU) traitant les données à la fréquence de sur-échantillonnage ainsi déterminée,
- des moyens de sous-échantillonnage (DS) aptes à sous-échantillonner le signal de sortie échantillonné à la fréquence de sur-échantillonnage (s[Few]) afin de fournir un signal de sortie échantillonné à la fréquence d'échantillonnage (s[Fe]) à l'unité de sortie.

3. Appareil portatif selon la revendication 1, comprenant des moyens de correction (CM) aptes à calculer une valeur moyenne des valeurs de données contenues dans la ligne à retard et à soustraire cette valeur moyenne des valeurs de données du signal de sortie.

4. Appareil portatif selon la revendication 1, où la valeur de donnée d'un échantillon du signal de sortie à un instant d'échantillonnage n ($S_n$) est égale à une valeur moyenne d'une valeur de donnée retardée de N échantillons ($S_{n-N}$) et d'une valeur de donnée retardée de N+1 échantillons ($S_{n-N-1}$).

5. Dispositif de génération de signal acoustique à partir d'un signal numérique d'entrée (in), ledit dispositif comprenant :

- une ligne à retard (DL) destinée à recevoir initialement N échantillons du signal numérique d'entrée, la valeur de N dépendant de la fréquence fondamentale du signal acoustique à produire, à mémoriser et à retarder des valeurs de données associées aux échantillons,
- une unité de calcul (AU) destinée à combiner au moins deux valeurs de données retardées venant de la ligne à retard afin de former une valeur de donnée modifiée qui est de nouveau mémorisée dans la ligne à retard et retardée de la valeur N, l'ensemble des valeurs de données modifiées formant également un signal de sortie,
- des moyens de sur-échantillonnage (US) aptes à calculer une fréquence de sur-échantillonnage à partir de la fréquence fondamentale du signal acoustique à produire, d'une fréquence d'échantillonnage à laquelle le signal de sortie doit être fourni et d'une longueur maximale de la ligne à retard, la ligne à retard et l'unité de calcul traitant les données à la fréquence de sur-échantillonnage ainsi déterminée, et
- des moyens de sous-échantillonnage (DS) aptes à sous-échantillonner le signal de sortie échantillonné à la fréquence de sur-échantillonnage (s[Few]) afin de fournir un signal de sortie échantillonné à la fréquence d'échantillonnage (s[Fe]) à une unité de sortie (OU) destinée à produire le signal acoustique.

6. Dispositif selon la revendication 7, comprenant des moyens de correction (CM) aptes à calculer une valeur moyenne des valeurs de données contenues dans la ligne à retard et à soustraire cette valeur moyenne des valeurs de données du signal de sortie.

7. Dispositif selon la revendication 7, où la valeur de donnée d'un échantillon du signal de sortie à un instant d'échantillonnage n ($S_n$) est égale à une valeur moyenne d'une valeur de donnée retardée de N échantillons ($S_{n-N}$) et d'une valeur de donnée retardée de N+1 échantillons ($S_{n-N-1}$).

8. Méthode de traitement d'un signal numérique d'entrée (in) permettant de générer un signal de sortie (s[Fe]) destiné à être converti en signal acoustique, ladite méthode comprenant :

- une étape de stockage (STO) de valeurs de données associées à N échantillons du signal numérique d'entrée dans une table, la valeur de N dépendant de la fréquence fondamentale du signal acoustique à produire,
- une étape de retardement des valeurs de données stockées dans la table,
- une étape de calcul destinée à combiner au moins deux valeurs de données retardées issues de la table afin de former une valeur de donnée modifiée qui est destinée à être de nouveau stockée dans la table et retardée de la valeur N, l'ensemble des valeurs de données modifiées formant également le signal de sortie,
- une étape de sur-échantillonnage destinée à calculer une fréquence de sur-échantillonnage à partir de la fréquence fondamentale du signal acoustique à produire, d'une fréquence d'échantillonnage à laquelle le signal de sortie doit être fourni et d'une longueur maximale de la table, les étapes de stockage et de calcul traitant les données à la fréquence de sur-échantillonnage ainsi déterminée,
- une étape de sous-échantillonnage du signal de sortie échantillonné à la fréquence de sur-échantillonnage (s[Few]) afin de fournir un signal de sortie échantillonné à la fréquence d'échantillonnage (s[Fe]).

9. Méthode de traitement selon la revendication 10, comprenant une étape de correction destinée à calculer une valeur moyenne des valeurs de données contenues dans la ligne à retard et à soustraire cette valeur moyenne des valeurs de données du signal de sortie.

10. Méthode de traitement selon la revendication 10, où la valeur de donnée d'un échantillon du signal de sortie à un instant d'échantillonnage n ($S_n$) est égale à une valeur moyenne d'une valeur de donnée retardée de N échantillons ($S_{n-N}$) et d'une valeur de donnée retardée de N+1 échantillons ($S_{n-N-1}$).

11. Produit programme d'ordinateur qui comprend une suite d'instructions, qui, lorsqu'elles sont chargées dans un appareil portatif, font que l'appareil portatif exécute la méthode de génération de signal selon l'une des revendications 8 à 10.

## FIG. 1

## FIG. 2

## FIG. 3

FIG. 4

FIG. 5

Office européen
des brevets

**RAPPORT DE RECHERCHE EUROPEENNE**

Numéro de la demande

EP 01 20 1134

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 5 390 244 A (HINMAN BRIAN L ET AL) 14 février 1995 (1995-02-14) * abrégé * | 1-11 | H04M19/04 |
| A | US 5 295 178 A (NICKEL RODNEY L ET AL) 15 mars 1994 (1994-03-15) * abrégé * | 1-11 | |
| A | GB 2 313 017 A (MOTOROLA ISRAEL LTD) 12 novembre 1997 (1997-11-12) * abrégé * | 1-11 | |
| A | PATENT ABSTRACTS OF JAPAN vol. 2000, no. 01, 31 janvier 2000 (2000-01-31) & JP 11 284759 A (NEC CORP), 15 octobre 1999 (1999-10-15) * abrégé * | 1-11 | |
| D,A | PATENT ABSTRACTS OF JAPAN vol. 1997, no. 08, 29 août 1997 (1997-08-29) & JP 09 101786 A (MATSUSHITA ELECTRIC IND CO LTD), 15 avril 1997 (1997-04-15) * abrégé * | 1-11 | **DOMAINES TECHNIQUES RECHERCHES (Int.Cl.7)** H04M |

Le présent rapport a été établi pour toutes les revendications

| Lieu de la recherche | Date d'achèvement de la recherche | Examinateur |
|---|---|---|
| LA HAYE | 15 octobre 2001 | Montalbano, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non—écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 20 1134

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-10-2001

| Document brevet cité au rapport de recherche | | Date de publication | Membre(s) de la famille de brevet(s) | | Date de publication |
|---|---|---|---|---|---|
| US 5390244 | A | 14-02-1995 | AUCUN | | |
| US 5295178 | A | 15-03-1994 | AUCUN | | |
| GB 2313017 | A | 12-11-1997 | WO | 9742778 A2 | 13-11-1997 |
| JP 11284759 | A | 15-10-1999 | JP | 3082739 B2 | 28-08-2000 |
| JP 09101786 | A | 15-04-1997 | AUCUN | | |

EPO FORM P0460

Pour tout renseignement concernant cette annexe : voir Journal Officiel de l'Office européen des brevets, No.12/82